# EUROPÄISCHE PATENTANMELDUNG

(11) **EP 1 167 709 A1**
(43) Veröffentlichungstag der Anmeldung: **02.01.2002**
(21) Anmeldenummer: 01114913.5
(22) Anmeldetag: 20.06.2001
(51) Int. Cl.: F01N 3/033, F01N 3/08, B01D 53/48

(54) **Abgasreinigungsanlage und Verfahren zum Betrieb einer Abgasreinigungsanlage**

(30) Priorität: 21.06.2000 DE 10029513
(71) Anmelder: DaimlerChrysler AG, 70567 Stuttgart (DE)
(72) Erfinder: Brüggemann, Hans, 73650 Winterbach (DE); Duvinage, Frank, Dr., 73230 Kirchheim (DE); Nolte, Arno, 70374 Stuttgart (DE); Paule, Markus, 73630 Remshalden (DE); Sander, Henning, 71634 Ludwigsburg (DE); Schommers, Joachim, Dr., 71573 Allmersbach i.T. (DE); Thiemann, Karl-Heinz, 71404 Korb (DE); Wenninger, Günter, 70599 Stuttgart (DE)

(57) **Zusammenfassung**

1. Abgasreinigungsanlage und Verfahren zum Betrieb einer Abgasreinigungsanlage.
2.1. Die Erfindung betrifft eine Abgasreinigungsanlage, insbesondere für ein Kraftfahrzeug mit Verbrennungsmotor, mit einem Partikelfilter.
2.2. Erfindungsgemäß sind stromaufwärts des Partikelfilters Mittel zum Verhindern des Entstehens von aschebildenden Verbindungen des im Abgas enthaltenen Schwefels angeordnet.
2.3. Verwendung z.B. für Kraftfahrzeuge mit Dieselmotor.

## Beschreibung

Die Erfindung betrifft eine Abgasreinigungsanlage, insbesondere für ein Kraftfahrzeug mit Verbrennungsmotor, mit einem Partikelfilter. Die Erfindung betrifft auch ein Verfahren zum Betrieb einer Abgasreinigungsanlage.

Partikelfilter werden speziell bei dieselgetriebenen Fahrzeugen zur Verringerung der Partikelemission eingesetzt. Mit einem Partikelfilter sollen vor allem im Abgas vorhandene Rußpartikel zurückgehalten werden. Im Partikelfilter zurückgehaltene Rußpartikel können in speziellen Betriebsphasen des Verbrennungsmotors abgebrannt werden. Nicht abgebrannt werden können dagegen Ascherückstände im Filter, die über die Betriebszeit des Kraftfahrzeugs zur Filterverstopfung durch Veraschung führen.

Zur Filterverstopfung durch Veraschung tragen maßgeblich folgende Komponenten bei:
Motoröl-Ascherückstände durch Ölverbrauch des Verbrennungsmotors,
Kraftstoff-Ascherückstände durch den Kraftstoffverbrauch, Additiv-Ascherückstände durch Additivzugaben im Kraftstoff zur Regenerationsunterstützung des Partikelfilters sowie
   sonstige Rückstände, beispielsweise aus der Ansaugluft, Motorabrieb oder Verschleiß und Korrosion der Abgasanlage.

Infolgedessen muss der Partikelfilter nach einem vorgegebenen Serviceintervall, beispielsweise 80000 Fahrkilometer des Fahrzeugs, ausgetauscht oder durch einen Waschvorgang gereinigt werden.

Die Filterverstopfung durch Filterveraschung ist ein kontinuierlicher Prozess über der Laufstrecke des Fahrzeugs. Bei einem durchschnittlichen Ölverbrauch von 0,2 Liter/1000km können nach 100000km bis zu 180g Asche oder auch mehr entstehen. Die Ascherückstände im Filter bewirken einen erhöhten Druckabfall des Partikelfilters, wodurch ein höherer Abgasgegendruck, eine Erhöhung des Kraftstoffverbrauchs um bis zu 8% oder mehr und ein Motorleistungsverlust verursacht wird. Da die Ascherückstände nicht mehr abbaubar/regenerierbar sind, muss der Partikelfilter nach einer bestimmten Laufzeit oder bestimmten Ansammlung an Asche im Filter ausgebaut und gereinigt oder getauscht werden.

Im einzelnen gelangt aufgrund des Ölverbrauchs Ca, Fe, Mg, Zn, P und S ins Abgas. Aufgrund des Kraftstoffverbrauches gelangt Schwefel ins Abgas. Aus Kraftstoffadditiven gelangt Ce, Fe, Ca und Na ins Abgas. Durch Antrieb und Korrosion treten im Abgas Fe und Al auf.

Eine Aschebildung erfolgt durch Sulfate, Oxide und Phosphate, beispielsweise Sulfatasche CaSO₄ und Oxidasche CaO.

Die dadurch verursachte Ascheablagerung im Filter wird zu mehr als 50% durch Sulfatasche verursacht.

In der Fig. 5 ist ein konventionelles Abgasreinigungssystem mit einem Oxidationskatalysator 1 und einem Partikelfilter 2 schematisch dargestellt. Das vom Motor kommende Abgas enthält an Schwefelverbindungen beispielsweise 98% SO₂, 2% SO₃ sowie Ca, Fe, Mg, Zn und P. Bei Temperaturen von mehr als 350°C erfolgt im Oxidationskatalysator 1 eine Sulfatbildung, indem SO₂ und SO₃ zu SO₄ umgesetzt werden. Stromabwärts des Oxidationskatalysators 1 entsteht Asche, beispielsweise CaSO₄, ZNSO₄, MgSO₄, CaO, FeO und dergleichen. Diese Asche lagert sich im Partikelfilter 2 ab und verursacht dessen Verstopfung.

Mit der Erfindung soll eine Abgasreinigungsanlage und ein Verfahren zum Betrieb einer Abgasreinigungsanlage bereitgestellt werden, durch die eine Partikelfilterverstopfung durch Ascherückstände verringert wird.

Erfindungsgemäß ist hierzu eine Abgasreinigungsanlage, insbesondere für ein Kraftfahrzeug mit Verbrennungsmotor, mit einem Partikelfilter vorgesehen, bei dem stromaufwärts des Partikelfilters Mittel zum Verhindern des Entstehens von aschebildenden Verbindungen des im Abgas enthaltenen Schwefels angeordnet sind.

Der Erfindung liegt das Prinzip zugrunde, die Asche vor dem Partikelfilter nicht entstehen zu lassen, sondern für die Aschebildung verantwortliche Verbindungen in einen gasförmigen Zustand zu bringen oder im gasförmigen Zustand zu erhalten, so dass diese den Partikelfilter durchströmen können ohne abgelagert zu werden. Hierbei wird vor allem auf die Vermeidung von Sulfaten abgezielt, welche einen großen Bestandteil der Asche ausmachen.

Demgemäß soll der für die Aschebildung hauptsächlich verantwortliche, im Abgas enthaltene Schwefel in nicht aschebildende Verbindungen umgesetzt werden, um eine Sulfatbildung im Abgas zu vermeiden.

In Weiterbildung der Erfindung weisen die Mittel einen SOₓ-Speicher auf.

Mittels einer SOₓ-Falle oder eines SOₓ-Speichers kann der im Abgas enthaltene Schwefel gespeichert werden, so dass die Menge der aschebildenden Schwefelverbindungen im Abgas deutlich verringert ist. Wenn die Speicherkapazität der SOₓ-Falle erschöpft ist, kann diese in einer Regenerationsphase regeneriert werden. Hierbei wird der gespeicherte Schwefel in Form von gasförmigen Verbindungen freigesetzt, die den Partikelfilter passieren können.

In Weiterbildung der Erfindung sind die Mittel mit einem NOₓ-Speicher und/oder mit einem Oxidationskatalysator kombiniert.

Durch diese Maßnahmen wird eine Verbesserung der Abgasqualität erreicht.

Das der Erfindung zugrunde liegende Problem wird auch durch ein Verfahren zum Betrieb einer Abgasreinigungsanlage gelöst, mit dem die Abgasreinigungsanlage in einer Weise betrieben wird, dass keine aschebildenden Verbindungen des im Abgas enthaltenen Schwefels entstehen.

Auf diese Weise kann eine Aschebildung deutlich verringert werden, da Schwefelverbindungen einen Großteil der für die Aschebildung verantwortlichen Verbindungen ausmachen.

In Weiterbildung der Erfindung sind Normalbetriebsphasen mit magerer Abgaszusammensetzung zum Speichern des im Abgas enthaltenen Schwefels und Regenerationsphasen mit fetter Abgaszusammensetzung zum Freisetzen des gespeicherten Schwefels in Form von gasförmigen Verbindungen vorgesehen.

Während der Normalbetriebsphasen wird dadurch eine Sulfatbildung im Abgas und infolge dessen auch die Sulfatascheentstehung deutlich reduziert. Ist die Speicherkapazität des Schwefelspeichers erschöpft, wird eine Regenerationsphase mit fetter Abgaszusammensetzung eingeleitet, um den Schwefelspeicher zu regenerieren. Hierbei wird der gespeicherte Schwefel in Form von gasförmigen Verbindungen freigesetzt, die den Partikelfilter passieren können. Dadurch wird eine Filterverstopfung durch Veraschung wirkungsvoll verhindert. Folglich kann ein Serviceintervall für einen Partikelfilter bis zu einer Reinigung oder einem Filterwechsel bei gleichen Filtervolumen deutlich erhöht werden. Im Abgas vorhandene Schwefeloxide, beispielsweise SO₂ und SO₃, werden im Schwefelspeicher an einem Speichermetall, beispielsweise Barium (Ba), abgespeichert. Im Schwefelspeicher entsteht dadurch BaSO₄. Dadurch kann eine Sulfatbildung im Abgas stromabwärts des Schwefelspeichers verhindert werden. Während der Regenerationsphasen wird das im Schwefelspeicher gespeicherte BaSO₄ zu SO₂, H₂S und COS umgesetzt. Die Bildung von SO₄ ist durch die sauerstoffarme oder fette Abgaszusammensetzung gering. Die freigesetzten Schwefelverbindungen sind gasförmig und können den Partikelfilter daher passieren. Nach Regeneration des Schwefelspeichers kann der Motor wieder mit magerer Abgaszusammensetzung betrieben werden.

Vorteilhafterweise wird die Abgastemperatur in den Regenerationsphasen in einen Bereich von 550°C bis 700°C angehoben.

Weitere Merkmale und Vorteile der Erfindung ergeben sich aus den Ansprüchen und der nachfolgenden Beschreibung im Zusammenhang mit den Zeichnungen. Die Zeichnungen zeigen:
- Fig. 1: eine erste bevorzugte Ausführungsform der erfindungsgemäßen Abgasreinigungsanlage,
- Fig. 2: eine zweite bevorzugte Ausführungsform der erfindungsgemäßen Abgasreinigungsanlage,
- Fig. 3: eine dritte bevorzugte Ausführungsform der erfindungsgemäßen Abgasreinigungsanlage,
- Fig. 4: eine Abgasanlage eines Kraftfahrzeugs mit Verbrennungsmotor mit einer erfindungsgemäßen Abgasreinigungsanlage und
- Fig. 5: eine konventionelle Abgasreinigungsanlage.

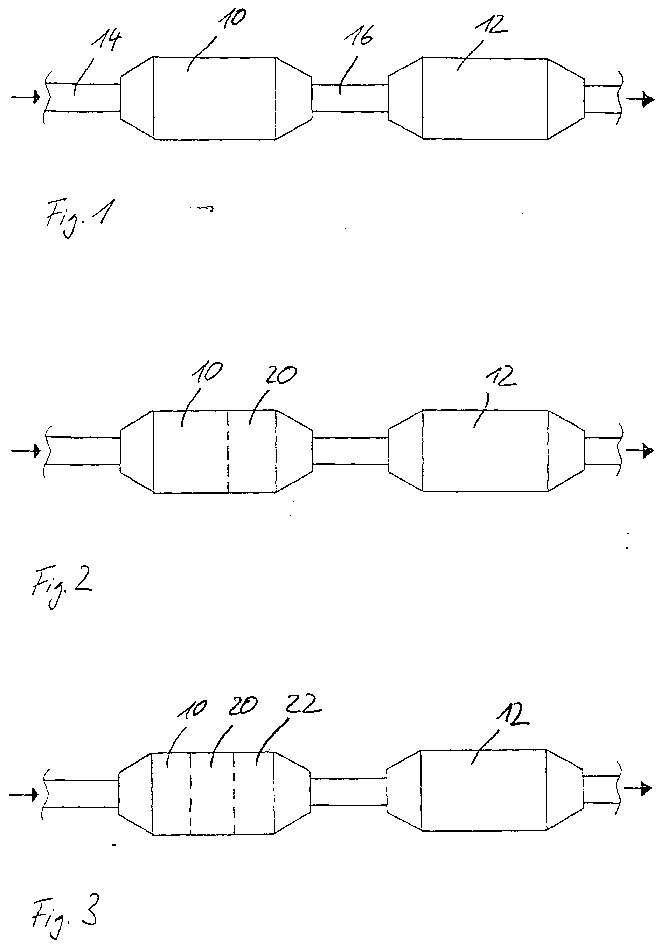

Fig. 1 zeigt schematisch eine erfindungsgemäße Abgasreinigungsanlage mit einem SOₓ-Speicher 10 und einem Partikelfilter 12. Über einen Rohrabschnitt 14 gelangt Abgas von einem Verbrennungsmotor zu dem SOₓ-Speicher 10. Eine Strömungsrichtung in der Abgasreinigungsanlage ist durch Pfeile angedeutet. Das vom Motor kommende Abgas im Rohrabschnitt 14 enthält an Schwefelverbindungen zu etwa 98% SO₂ sowie zu etwa 2% SO₃. Weiter sind im Abgas Ca, Fe, Mg, Zn und P enthalten.

Der SOₓ-Speicher 10 speichert bei magerer Abgaszusammensetzung, sogenannter überstöchiometrischer Abgaszusammensetzung mit λ > 1, die Schwefeloxide SO₂, SO₃ an einem Speichermetall, z.B. Barium (Ba), in Form von BaSO₄ ab. Somit wird eine Sulfatbildung im Abgas und in Folge auch die Sulfatascheentstehung reduziert. Die aschebildenden Bestandteile im Abgas reagieren entweder zu Oxidasche oder verbleiben in einem gasförmigen Zustand. So liegen Ca, Fe, Mg, Zn und P im Rohrabschnitt 16 und im Partikelfilter 12 noch in gasförmigen Verbindungen vor, und können diesen passieren, was zu einer reduzierten Ascheablagerung im Partikelfilter 12 führt. Auch bei Bildung von Oxidaschen statt Sulfataschen kann die Aschebelastung des Partikelfilters 12 günstig beeinflusst werden, da Oxidasche eine geringere Molmasse als Sulfatasche aufweist.

Vorteilhafterweise wird der das Abgas erzeugende Verbrennungsmotor mit Kraftstoff mit reduziertem Schwefelgehalt, beispielsweise kleiner als 10ppm, betrieben, um eine möglichst geringe Grundbelastung an Schwefel im Abgas zu erreichen. Selbst bei schwefelfreiem Kraftstoff ist der SOₓ-Speicher 10 aber zweckmäßig, da das Abgas im Rohrabschnitt 14 Schwefelbestandteile aus dem Motorölverbrauch enthält.

Ist die Speicherkapazität des SOₓ-Speichers 10 erschöpft, wird gemäß der Erfindung eine Regenerationsphase eingeleitet. Zur Regeneration oder Entschwefelung wird die Abgastemperatur in einen Bereich von 550°C bis 700°C angehoben und der Verbrennungsmotor in den unterstöchiometrischen oder fetten Betrieb (λ<1) umgeschaltet. In der Regenerationsphase gibt der SOₓ-Speicher 10 den als BaSO₄ gespeicherten Schwefel in Form von gasförmigen Schwefelverbindungen ab, so z.B. SO₃, SO₂, H₂S oder COS. Die Bildung von SO₄ ist dabei durch das sauerstoffarme oder fette Luftverhältnis gering. Die freigesetzten Schwefelverbindungen können den Partikelfilter 12 gasförmig passieren. Auch in der Regenerationsphase erfolgt keine Sulfatbildung im Rohrabschnitt 16 und Ca, Fe, Mg, Zn, P liegen noch in gasförmigen Verbindungen vor und können den Partikelfilter 12 passieren, so dass eine Ascheablagerung reduziert ist. Nach Regeneration des SOₓ-Speichers 10 kann der Verbrennungsmotor wieder mit überstöchiometrischer oder magerer Abgaszusammensetzung betrieben werden.

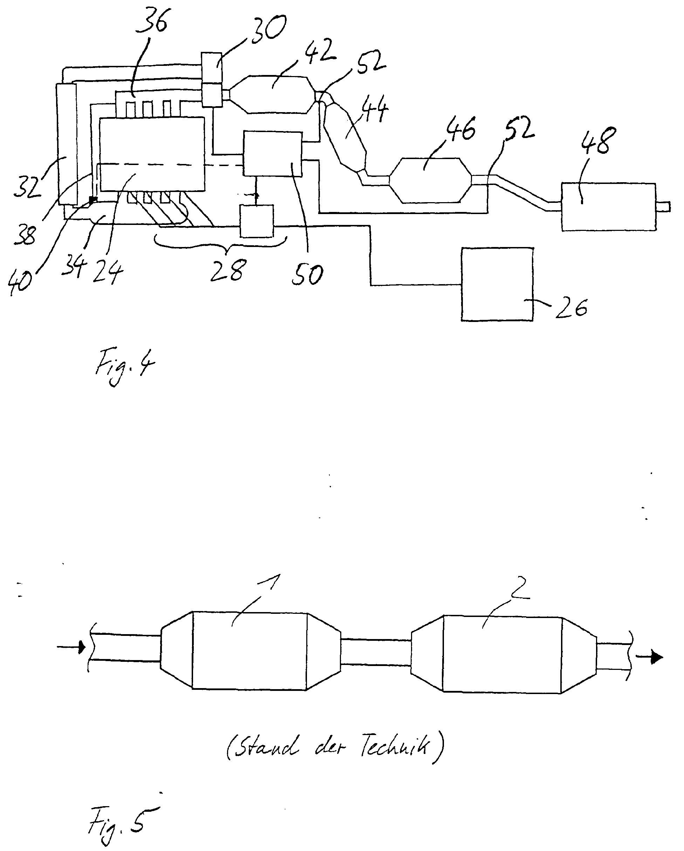

Die schematische Darstellung der Fig. 2 zeigt eine weitere Ausführungsform der erfindungsgemäßen Abgasreinigungsanlage, bei der im Unterschied zu der in Fig. 1 dargestellten Abgasreinigungsanlage der SOₓ-Speicher 10 mit einem NOₓ-Speicher 20 kombiniert ist.

In der schematischen Darstellung der Fig. 3 ist eine dritte Ausführungsform der erfindungsgemäßen Abgasreinigungsanlage dargestellt, bei der im Unterschied zur Abgasreinigungsanlage der Fig. 1 der SOₓ-Speicher 10 mit dem NOₓ-Speicher 20 und einem Oxidationskatalysator 22 kombiniert ist.

Die in der Fig. 2 und 3 dargestellten Abgasreinigungsanlagen tragen zu einer weiteren Schadstoffverminderung im ausgestoßenen Abgas bei. Die in der Fig. 2 und der Fig. 3 gezeigten Abgasreinigungsanlagen werden in gleicher Weise wie die in der Fig. 1 gezeigte Abgasreinigungsanlage betrieben, d.h. mit Normalbetriebsphasen mit magerer Abgaszusammensetzung zum Speichern des im Abgas enthaltenen Schwefels in Sulfatform und nach Erschöpfung der Speicherkapazität des SOₓ-Speichers 10 mit Regenerationsphasen mit fetter Abgaszusammensetzung zum Freisetzen des gespeicherten Schwefels in Form von gasförmigen Verbindungen.

Die schematische Darstellung der Fig. 4 zeigt einen Dieselmotor 24, der mit einer erfindungsgemäßen Abgasreinigungsanlage versehen ist. Der Dieselmotor 24 wird aus einem Kraftstofftank 26 mit Dieselkraftstoff mit reduziertem Schwefelgehalt gespeist.

Eine Kraftstoffeinspritzung erfolgt mittels eines sogenannten Common-Rail-Einspritzsystems 28. Der Dieselmotor 24 ist mit einem Abgasturbolader 30 versehen, der komprimierte Ansaugluft über einen Ladeluftkühler 32 in den Luftsammler 34 des Dieselmotors 24 liefert.

Zwischen einem Abgaskrümmer 36 und dem Luftsammler 34 verläuft eine Abgasrückführleitung 38, die mittels eines steuerbaren Abgasrückführventils 40 geöffnet und verschlossen werden kann.

Ausgehend vom Abgaskrümmer 36 gelangt das Abgas des Dieselmotors 24 über die Abgasturbine des Abgasturboladers 30 zu einem SOₓ-Speicher 42. Der SOₓ-Speicher 42 ist mit einem NOₓ-Speicher und einem Oxidationskatalysator kombiniert. Stromabwärts des SOₓ-Speichers 42 folgt ein Partikelfilter 44. Dem Partikelfilter 44 nachgeschaltet ist ein Unterboden-Katalysator, der für eine weitere Verminderung des Schadstoffausstoßes sorgt. Stromabwärts des Unterbodenkatalysators ist ein Schalldämpfer zur Verringerung der Geräuschbelastung vorgesehen.

Ein Steuergerät 50 beaufschlagt das Common-Rail-Einspritzsystem 28 und den Abgasturbolader 30 und kann auf diese Weise eine fette bzw. magere Abgaszusammensetzung einstellen. Von dem Steuergerät 50 wird auch das Abgasrückführventil 40 angesteuert. An mehreren Stellen im Verlauf der Abgasanlage sind Sensoren 52 vorgesehen, durch die eine aktuelle Abgaszusammensetzung erfasst und dem Steuergerät 50 übermittelt werden kann. Durch Analyse der Sensorsignale im Steuergerät 50 kann beispielsweise auch auf die noch verbleibende Speicherkapazität des SOₓ-Speichers 42 rückgeschlossen werden. Wird im Steuergerät 50 erkannt, dass der SOₓ-Speicher 42 belegt ist, wird eine Regenerationsphase eingeleitet. Nach Regeneration des SOₓ-Speichers 42 schaltet das Steuergerät 50 wieder auf den Speicherbetrieb um.

## Patentansprüche

1. Abgasreinigungsanlage, insbesondere für ein Kraftfahrzeug mit Verbrennungsmotor, mit einem Partikelfilter (12; 44),
**dadurch gekennzeichnet, dass**
stromaufwärts des Partikelfilters (12; 44) Mittel (10; 42) zum Verhindern des Entstehens von aschebildenden Verbindungen des im Abgas enthaltenen Schwefels angeordnet sind.

2. Abgasreinigungsanlage nach Anspruch 1,
**dadurch gekennzeichnet, dass**
die Mittel einen SOₓ-Speicher (10; 42) aufweisen.

3. Abgasreinigungsanlage nach einem der vorstehenden Ansprüche,
**dadurch gekennzeichnet, dass**
die Mittel (10; 42) mit einem NOₓ-Speicher (20) kombiniert sind.

4. Abgasreinigungsanlage nach einem der vorstehenden Ansprüche,
**dadurch gekennzeichnet, dass**
die Mittel (10; 42) mit einem Oxidationskatalysator (22) kombiniert sind.

5. Verfahren zum Betrieb einer Abgasreinigungsanlage nach einem der vorstehenden Ansprüche,
**dadurch gekennzeichnet, dass**
die Abgasreinigungsanlage in einer Weise betrieben wird, dass keine aschebildenden Verbindungen des im Abgas enthaltenen Schwefels entstehen.

6. Verfahren nach Anspruch 5,
**dadurch gekennzeichnet, dass**
Normalbetriebsphasen mit magerer Abgaszusammensetzung zum Speichern des im Abgas enthaltenen Schwefels und Regenerationsphasen mit fetter Abgaszusammensetzung zum Freisetzen des gespeicherten Schwefels in Form von gasförmigen Verbindungen vorgesehen sind.

7. Verfahren nach Anspruch 6,
**dadurch gekennzeichnet, dass**
in den Regenerationsphasen die Abgastemperatur in einen Bereich von 550°C bis 700°C angehoben wird.
